## Europäisches Patentamt
## European Patent Office
## Office européen des brevets

(19)

(11) Veröffentlichungsnummer: **0 219 768**
**B1**

(12)

# EUROPÄISCHE PATENTSCHRIFT

(45) Veröffentlichungstag der Patentschrifft:
**07.02.90**

(51) Int. Cl. $^5$: **F 16 C 29/10, F 16 B 1/02**

(21) Anmeldenummer: **86113960.8**

(22) Anmeldetag: **08.10.86**

(54) **Lager.**

(30) Priorität: **21.10.85 CH 4531/85**

(43) Veröffentlichungstag der Anmeldung:
**29.04.87 Patentblatt 87/18**

(45) Bekanntmachung des Hinweises auf die Patenterteilung:
**07.02.90 Patentblatt 90/06**

(84) Bennante Vertragsstaaten:
**DE FR GB IT NL SE**

(56) Entgegenhaltungen:
**DE-U-1 894 955**
**DE-U-1 952 647**
**US-A-3 025 072**

(73) Patentinhaber: **Wyler AG**
**Im Hölderli**
**CH-8405 Winterthur (CH)**

(72) Erfinder: **Stauber, Siegfried Theodor**
**Hüttenkopfstrasse 32**
**CH-8051 Zürich (CH)**

(74) Vertreter: **Quehl, Horst M., Dipl.-Ing.**
**Seestrasse 640 Postfach 90**
**CH-8706 Meilen/Zürich (CH)**

## Beschreibung

Die Erfindung betrifft ein Lager mit den Merkmalen des Oberbegriffs des Patentanspruchs 1.

Eine hinsichtlich der Anordnung ihrer Bestandteile vergleichbare Vorrichtung ist durch die US-A-3 025 072 bekannt. Bei dieser wird eine Stange durch zwei im axialen Abstand voneinander angeordnete schmale Klemmringe gehalten, die jeweils radial innerer Bestandteil einer radial zu der Stange gerichteten Ringmembran sind. Zwischen den beiden Ringmembranen und damit auch zwischen den beiden Klemmringen ist mit ständigem Abstand zu der Stange eine ringförmige Druckkammer angeordnet, die sich bei Überdruck in ihr in nur axialer Richtung ausdehnt, so dass sie die beiden Ringmembranen auswölbt und folglich die zugehörigen Klemmringe radial aufweitet.

Ein typisches Beispiel der genannten Lageranordnung bildet eine auf einer Führungsstange oder einem Säulenständer verschiebbare Lagerhülse. Die Anordnung kann jedoch auch aus einem Lagerkörper bestehen, der innerhalb eines Hohlzylinders relativ verschiebbar ist.

Den bekannten Lagern der genannten Art ist der Nachteil gemeinsam, dass beim Übergang vom Zustand der Relativbewegung zwischen beiden Hauptteilen der Lageranordnung in den Stillstand und die Position der klemmenden Halterung eine Änderung der Achsposition des bewegten Teiles relativ zum feststehenden Teil der Anordnung erfolgt, verursacht durch die Aufhebung der pneumatischen oder hydraulischen Gleitmittelschicht zwischen den Lagerflächen und die vorhandene mechanische bzw. statische Belastung des vorher bewegten Teiles. Es tritt ein Kippen und/oder eine Versetzung der Achsen relativ zueinander auf. Die üblichen Klemmmittel führen ebenfalls zu einer Lageveränderung beim Festklemmen. Solche Lageveränderungen sind besonders nachteilig bei der Anwendung des Lagers an Messeinrichtungen, bei denen z. B. ein Messtaster auf einer Säule in verschiedene Messpositionen zu bewegen ist, die genau einhaltbar sein sollen.

Der Erfindung liegt die Aufgabe zugrunde, die genannten Nachteile bekannter Lager zu beseitigen und somit ein besonders für Messeinrichtungen geeignetes Lager zu finden, bei dem durch Stillstand und klemmende Halterung keine Veränderung der Ausrichtung der Achsen beider Lagerteile relativ zueinander stattfindet. Die Lösung dieser Aufgabe erfolgt aufgrund der Merkmale des Patentanspruchs 1. Vorteilhafte Ausgestaltungen der Erfindung sind Gegenstand der abhängigen Ansprüche.

Im folgenden wird die Erfindung anhand von in den Zeichnungen dargestellten Ausführungsbeispielen näher erläutert. Es zeigt:

Fig. 1 einen Axialschnitt durch ein Lager mit einer im Durchmesser veränderlichen hohlen Stange,

Fig. 2 einen Axialschnitt durch ein Lager mit einer im Durchmesser veränderlichen äusseren Lagerhülse,

Fig. 3 einen Axialschnitt durch ein Lager mit einer im Durchmesser veränderlichen inneren Lagerhülse eines Führungskolbens,

Fig. 4 einen Querschnitt durch die Wand der Stange nach Fig. 1 oder die Wand einer Hülse nach Fig. 2 oder Fig. 3,

Fig. 5 ein Anwendungsbeispiel erfindungsgemässer Lager für eine verdrehfeste Führung,

Fig. 6 einen Querschnitt durch eine Schlittenführung mit einem erfindungsgemässen Lager und

Fig. 7 einen Querschnitt durch eine verdrehfeste Flächenführung mit einem erfindungsgemässen Lager.

Die Darstellungen der Figuren sind nicht massstäblich und nur schematisch. Insbesondere ist der Lagerspalt 2 übertrieben breit dargestellt. Er beträgt tatsächlich nur wenige tausendstel Millimeter ($\mu$) bei einem Luftlager.

Wesentlich für die Erfindung ist die Verwendung eines eingeschlossenen und/oder einschliessenden Lagerteils, das unter dem Druck eines Mediums, d.h. von Luft oder Schmieröl so weit im Durchmesser bzw. der Querabmessung zusammendrückbar oder ausdehnbar ist, dass der Lagerspalt entsteht oder verschwindet.

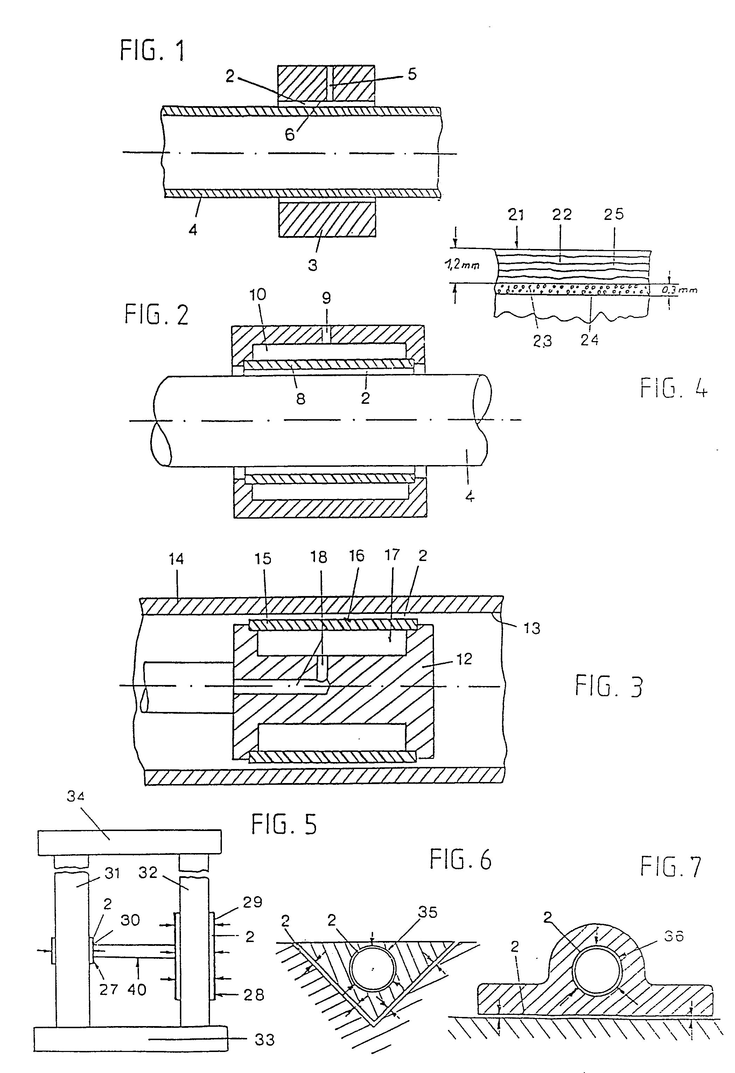

Das Ausführungsbeispiel nach Fig. 1 hat einen sich starr verhaltenden äusseren, umschliessenden Lagerteil 3 und eine im Durchmesser veränderliche hohle Führungsstange 4. Über mindestens einen, in dem umschliessenden Lagerteil vorgesehenen Radialkanal 5 wird bei der Ausführung als Luftlager Luft unter einem Druck von z. B. 5 atü (0,05 kp/mm$^2$ in den Lagerspalt 2 geführt, so dass dieser in Umfangsrichtung des Lagers eine konstante Breite von z. B. 5 $\mu$ aufweist und beide Lagerteile 3 und 4 zueinander zentriert sind.

Beim Ausführungsbeispiel nach Fig. 1 kann das Klemmen des Lagers auf verschiedene Weise erreicht werden, ohne dass die Zentrierung der Lagerteile 3, 4 zueinander verloren geht:

1) Die Bohrung 6 des umschliessenden Lagerteils hat bei Normaltemperatur einen kleineren Durchmesser als die Stange 4, und das umschliessende Lagerteil, das z. B. aus Messing oder einer Aluminiumlegierung besteht, wird nach Erwärmung um z. B. 20°C auf die Stange aufgeschoben. Das Untermass beträgt beispielsweise 5 $\mu$ und der Ausdehnungskoeffizient des umschliessenden Lagerteils 3 0,8 $\mu$/°C. Der Lagerspalt entsteht in diesem Fall durch den Druck der zugeführten Lagerluft. Bei Unterbrechung der Luftzufuhr nimmt die durch die Luft zusammengedrückte Stange ihren ursprünglichen Durchmesser wieder ein und presst sich klemmend gegen die Bohrung 6 des umschliessenden Lagerteils 3.

2) Die Bohrung 6 des umschliessenden Lagerteils 3 hat bei Normaltemperatur einen grösseren Durchmesser als die Stange 4. Das zentrierte Klemmen auf der gesamten Lagerfläche wird in diesem Fall durch Aufweiten der Stange unter innerem Überdruck durch ihre Verbindung mit einer Druckquelle erreicht.

3) Die Massnahmen der beiden genannten Klemmweisen 1., 2. können kombiniert angewendet werden, entsprechend Stoppen der Luftzufuhr zu dem Luftlager und Anwendung inneren Überdrucks in der Stange 4.

Bei der Klemmweise 1) des Ausführungsbeispieles nach Fig. 1 erfolgt die Aufweitung des umschliessenden Lagerteils 3 durch Erwärmung nur für die Montage auf der Stange. Das Ausführungsbeispiel nach Fig. 2 zeigt hingegen eine umschliessende Lagerhülse 8, deren Durchmesser durch den Druck eines Mediums verkleinert werden kann, um ein zentrisches Klemmen des Lagers zu erreichen. Das Medium, d.h. Luft oder Öl, wird über eine Öffnung 9 in eine die Lagerhülse 8 umschliessende Ringkammer 10 eingeführt, so dass die Lagerhülse 8 zusammengedrückt wird und so die klemmende Halterung bewirkt. Auch bei diesem Ausführungsbeispiel kann zusätzlich die Stange 4 durch inneren Überdruck entsprechend der zuvor genannten zweiten Klemmweise aufgeweitet werden.

Fig. 3 zeigt ein weiteres Ausführungsbeispiel bei dem das langgestreckte Führungsteil, d.h. die hohlzylindrische Stange, sich entsprechend Fig. 2 starr verhalten kann. Das eingeschlossene Teil 12 der Anordnung des Lagers ist kolbenartig ausgeführt und gleitet an der Innenfläche 13 des umschliessenden Teils 14. Aber auch hier ist eine kinematische Umkehr möglich. Das kolbenartige umschlossene Teil 12 trägt eine äussere Lagerhülse 15, so dass die genau bearbeitete Aussenfläche 16 zusammen mit der Innenfläche 13 die Lagerflächen bildet. Die Lagerhülse umschliesst eine Ringkammer 17, die über Bohrungen 18 im kolbenartigen Teil 12 mit einer äusseren Druckquelle in Verbindung steht. Für eine klemmende Halterung nach Bewegungsstillstand presst sich die Lagerhülse 15 unter dem Druck des Mediums in der Ringkammer 17 gegen die innere Lagerfläche 13.

Die gegenseitige Annäherung der Lagerflächen bis zur klemmenden Halterung kann jedoch auch beim Ausführungsbeispiel nach Fig. 3 auf verschiedene Weise erfolgen, beispielsweise indem die Lagerhülse 15 unter dem Druck des Lagermediums im Lagerspalt sich im Durchmesser verkleinert und bei Aufhebung dieses Drucks aufgrund ihrer Eigenelastizität, oder auch unterstützt durch einen Überdruck in der Ringkammer 17, sich gegen die Innenfläche 13 des Lagers presst. Auch kann sich diese Innenfläche des Lagers zusätzlich in Richtung zu der Hülse 15 bei nachlassendem Lagerdruck bewegen, wenn der umschliessende Teil des Lagers ebenfalls nicht starr ausgeführt ist.

Es versteht sich somit, dass die Radialbewegung der Lagerflächen relativ zueinander aufgrund verschiedener und auch kombinierter Prinzipien, d.h. Druck von aussen oder innen bei äusseren und/oder inneren zusammendrückbaren oder ausdehnbaren konzentrischen Lagerteilen 3, 4; 4, 8 oder 14, 15 erfolgen kann. Für die Einhaltung der genauen Ausrichtung der Achsen beider Lagerteile relativ zueinander zwischen dem Zustand der Lagerung, d.h. dem Zustand in dem die Lagerflächen durch das Lagermedium voneinander entsprechend dem Lagerspalt 2 entfernt sind und dem Zustand des klemmenden Kontakts zwischen den Lagerflächen, ist es erforderlich, dass der klemmende Kontakt im Gesamtbereich der Lagerung oder zumindest angenähert in diesem Bereich erfolgt, da sonst bei der klemmenden Halterung Kippkräfte an den Lagerteilen wirken können. Dies wird aufgrund der vorliegenden Erfindung erreicht, indem die gesamten Lagerflächen gleichzeitig auch die Klemmflächen bilden.

Durch die aufgrund der Erfindung mögliche genaue Einhaltung der Ausrichtung der Achsen der Lagerteile zueinander, d.h. der Konzentrizität, ist die Erfindung besonders vorteilhaft in der Messtechnik anwendbar. Zur Beseitigung des Widerspruchs zwischen der Verwendung von Lagerteilen, die bereits unter dem Druck des Lagermediums eine wesentliche Verformung erleiden und dem Erfordernis der Verwendung von Lagerteilen, die eine hohe Formstabilität bzw. Steifigkeit aufweisen, wird in vorteilhafter Ausgestaltung der Erfindung vorzugsweise die Wand des verformbaren Lagerteiles oder der verformbaren Lagerteile entsprechend der Darstellung in Fig. 4 ausgeführt. Diese Wand 21 ist mehrschichtig aufgebaut und hat einen grösseren Schichtanteil mit in Längsrichtung bzw. achsparallel verlaufenden Armierungsfasern 22 höherer Festigkeit, im Vergleich zu den quer bzw. in Umfangsrichtung verlaufenden Armierungsfasern 23 der dünneren Schicht 24. Letztere Fasern 23 sind Glasfasern während die Längsfasern 22 der dickeren Schicht 25 Kohlenstoffasern sind, so dass der Elastizitätsmodul der dickeren Schicht 25 ca. das Fünffache beträgt. Aufgrund der sogenannten Kesselformel lässt sich berechnen, dass bei einem Druck des Lagermediums von 5 atü, einem mittleren Durchmesser des Lagerteiles 4 von 37,5 mm und einer Länge von 500 mm die Längenänderung nicht wesentlich grösser ist als die Durchmesserveränderung und ca. 13 µ beträgt. Das Dickenverhältnis zwischen den Schichten 24, 25 beträgt beispielsweise 1 : 4 bei einer Gesamtdicke der Wand 21 von 1,5 mm. Das Bettungsmaterial der Fasern ist z. B. Epoxyharz.

Die Fig. 5 zeigt ein Anwendungsbeispiel von erfindungsgemässen Lagern 27, 28 für die Säulenführung 40 einer Messmaschine. An dem umschliessenden längeren Lagerteil ist ein nichtdargestellter Messarm starr befestigt, der sich durch die Vertikalverschiebung der umschliessenden Lagerteile 29, 30 auf den Messäulen 31, 32 in verschiedene Messpositionen verstellen und dort genau arretieren lässt. Eine solche Messmaschine dient beispielsweise bei einer Kombination mit einem präzis gelagerten Drehtisch der Rundheitsmessung von Objekten. Dabei ist die Rundheit in mehreren genau definierten Vertikalpositionen eines am Ende des Messarmes befestigten Tasters zu messen. Ohne die Verwendung von erfindungsgemässen Lagern wäre nach Erreichen einer bestimmten vertikalen Verschiebeposition, durch das anschliessende Arretieren in dieser Position, ein Kippen im Lager und damit eine Positionsänderung des Tasters weg von der vorgegebenen Stelle zu erwarten. Um diese Positionsänderung klein zu haben, haben die bekannten Maschinen dieser Art eine verhältnismässig massiv ausgeführte Messäule aus einem besonders starren Material und besonders aufwendig hergestellte Lagerungen an dieser Messaule. Eine Verdrehung des Messarmes wird dabei durch einen unrunden Querschnitt der Messäule verhindert. Demgegenüber hat die Maschine nach Fig. 5 nur zwei verhältnismässig dünne Messäulen 31, 32, von denen die das axial kürzere Lager 27 tragende Säule 31 der Verdrehsicherung dient. Die die Säulen 31, 32 miteinander verbindenden Querbalken 33, 34 gewährleisten die Parallelität der Säulen. Die Luftzufuhr an verschiedenen Stellen der Luftlager 27, 28 ist durch Pfeile angedeutet.

Die Fig. 6 und 7 zeigen Beispiele von Schlittenführungen die mittels eines erfindungsgemässen Lagers 35 bzw. 36 in genauer Position klemmend arretierbar sind, um vorgegebene Verstellpositionen exakt einhalten zu können. Die verdrehsteife Flächenführung nach Fig. 7 ist besonders bei grossen Gewichtsbelastungen vorteilhaft anwendbar.

Neben den bereits genannten Vorteilen eines erfindungsgemässen Lagers ergibt sich auch der Vorteil, dass zur Überwindung von Fertigungstoleranzen hinsichtlich der geometrischen Oberflächengenauigkeit, der Lagerspalt durch Drucksteuerung einstellbar ist. Die Klemmkraft ist ebenfalls einstellbar.

## Patentansprüche

1. Lager mit zwei relativ zueinander längsbewegbaren Teilen und mit Mitteln für die klemmende Halterung des bewegbaren Lagerteiles im Stillstand, wobei die zwei relativ zueinander längsbewegbaren Lagerteile jeweils zylindrisch geformt und konzentrisch zueinander angeordnet sind, dadurch gekennzeichnet, dass das umschlossene und/oder das umschliessende Lagerteil (4, 8, 15) im Bereich der Lagerung durch den unmittelbar auf dieses radial einwirkenden Druck des Schmiermediums im Lagerspalt (2) oder den gleichfalls unmittelbar auf dieses radial einwirkenden Druck eines fliessfähigen das Lager an der dem Lagerspalt abgekehrten Seite beaufschlagenden, Fremdmediums zusammendrückbar oder ausdehnbar ist, so dass durch die Steuerung dieses Druckes das Lagerspiel für eine klemmende Verbindung zwischen den Lagerflächen aufhebbar ist.

2. Lager nach Anspruch 1, dadurch gekennzeichnet, dass das umschlossene Lagerteil (4) rohrförmig ist und sein Innenraum mit einer Druckquelle eines fliessfähigen Mediums verbunden ist.

3. Lager nach Anspruch 1 oder 2, dadurch gekennzeichnet, dass im drucklosen Zustand der Lagerteile und bei Normaltemperatur der innere Durchmesser des umschliessenden Lagerteils (3, 8, 14) gleich oder kleiner ist als der Aussendurchmesser des inneren Lagerteils (4, 15).

4. Lager nach einem der Ansprüche 1 bis 3, dadurch gekennzeichnet, dass das äussere oder innere Lagerteil aus einem sich starr verhaltendem Material besteht, so dass nur das andere Lagerteil zusammendrückbar oder ausdehnbar ist.

5. Lager nach einem der Ansprüche 1 bis 4, dadurch gekennzeichnet, dass das zusammendrückbare oder ausdehnbare Lagerteil (8, 15) auf der dem Lagerspalt (2) abgekehrten Seite an eine Ringkammer (10, 17) angrenzt, die mit der Druckquelle eines fliessfähigen Mediums verbunden ist.

6. Lager nach einem der Ansprüche 1 bis 5, dadurch gekennzeichnet, dass das zusammendrückbare oder ausdehnbare Lagerteil die Form eines Hohlzylinders hat, dessen Wand (21) aus faserarmiertem Kunststoffmaterial besteht, wobei die Wand mehrschichtig aufgebaut ist, mit einem grösseren Schichtanteil von achsparallel verlaufenden Armierungsfasern (22).

7. Lager nach Anspruch 6, dadurch gekennzeichnet, dass die achsparallel verlaufenden Armierungsfasern Kohlenstoffasern sind und in einem geringeren Schichtanteil vorhandene, in Umfangsrichtung verlaufende Armierungsfasern Glasfasern sind.

8. Messmaschine mit Lagern nach einem der Ansprüche 1 bis 7, dadurch gekennzeichnet, dass ein Messarmträger (40) an zwei kreiszylindrischen Stangen (31, 32) mittels eines Lagers (27, 28) geführt ist, wobei das dem Messarm abgekehrte Lager (27) der Verdrehsicherung dient.

9. Schlittenführung mit mindestens einem Lager nach einem der Ansprüche 1 bis 7, dadurch gekennzeichnet, dass der Schlittenteil der Schlittenführung mittels eines Lagers (35, 36) eine der Klemmpositionierung dienende Stange umschliesst.

## Claims

1. Bearing with two parts longitudinally movable relative to one another and with means for the clamping mounting of the movable bearing part in the stationary state, the two bearing parts longitudinally movable relative to one another being in each case cylindrically shaped and concentric to one another, characterized in that the surrounded and/or the surrounding bearing part (4, 8, 15) is compressible or expandable in the vicinity of the mounting support by the pressure of the lubricating medium acting directly radially thereon in the bearing gap (2) or the pressure of a flowable outside medium acting on the bearing on the side remote from the bearing gap once again in a direct radial manner, so that through the control of this pressure the bearing gap can be removed for a clamping connection between the bearing surfaces.

2. Bearing according to claim 1, characterized in that the surrounded bearing part (4) is tubular and its inner area is connected to a pressure source for a flowable medium.

3. Bearing according to claims 1 or 2, characterized in that in the pressureless state of the bearing parts and at normal temperature the internal diameter of the surrounding bearing part (3, 8, 14) is the same or smaller than the external diameter of the inner bearing part (4, 15).

4. Bearing according to one of the claims 1 to 3, characterized in that the outer or inner bearing part is made from a rigidly behaving material, so that only the other bearing part is compressible or expandable.

5. Bearing according to one of the claims 1 to 4, characterized in that the compressible or expandable bearing part (8, 15) is adjacent on the side remote from the bearing gap (2) to an annular chamber (10, 17), which is connected to the pressure source for a flowable medium.

6. Bearing according to one of the claims 1 to 5, characterized in that the compressible or expandable bearing part is in the form of a hollow cylinder, whose wall (21) is made from fibre-reinforced plastics material, the wall being built up in multilayer form, with a larger layer proportion of axially parallel reinforcing fibres (22).

7. Bearing according to claim 6, characterized in that the axially parallel reinforcing fibres are carbon fibres and the circumferentially directed reinforcing fibres present in a smaller layer proportion are glass fibres.

8. Measuring machine with bearings according to one of the claims 1 to 7, characterized in that a measuring arm carrier (40) is guided on two circular cylindrical rods (31, 32) by means of a bearing (27, 28), the bearing (27) remote from the measuring arm serving to prevent rotation.

9. Slide guide with at least one bearing according to one of the claims 1 to 7, characterized in that the sliding part of the slide guide surrounds by means of a bearing (35, 36) a rod used for clamping positioning.

**Revendications**

1. Palier comportant deux pièces pouvant se déplacer longitudinalement l'une par rapport à l'autre et comportant des moyens pour le maintien par blocage, à l'arrêt, des pièces de palier mobiles, les deux pièces pouvant se déplacer longitudinalement l'une par rapport à l'autre étant chacune de forme cylindrique et étant disposées concentriquement l'une par rapport à l'autre, caractérisé en ce que la pièce de palier enveloppée et/ou la pièce de palier enveloppante (4, 8, 15) peut être comprimée ou dilatée, dans la zone de la portée du palier, au moyen de la pression, agissant radialement directement sur celle-ci, du fluide de graissage dans l'interstice de palier (2), ou au moyen de la pression, agissant de même radialement directement sur cette pièce, d'un fluide externe, venant agir sur le palier du côté opposé à l'interstice de palier, de telle façon qu'en commandant cette pression, le jeu du palier puisse être annulé pour obtenir une liaison par blocage entre les surfaces du palier.

2. Palier suivant la revendication 1, caractérisé en ce que la pièce de palier enveloppante (4) est en forme de tube et en ce que son volume interne est relié avec une source de pression d'un fluide susceptible de s'écouler.

3. Palier suivant la revendication 1 ou la revendication 2, caractérisé en ce que, dans l'état sans pression des pièces de palier, et avec une température normale, le diamètre intérieur des pièces de palier enveloppantes (3, 8, 14) est égal ou plus petit que le diamètre extérieur de la pièce de palier interne (4, 15).

4. Palier suivant l'une quelconque des revendications 1 à 3, caractérisé en ce que la pièce de palier extérieure ou intérieure est constituée d'un matériau se comportant rigidement, de telle façon que seulement l'autre pièce de palier soit compressible ou dilatable.

5. Palier suivant l'une quelconque des revendications 1 à 4, caractérisé en ce que la pièce de palier compressible ou dilatable (8, 15) est, du côté opposé à l'interstice de palier (2), contre une chambre annulaire (10, 17) qui est reliée avec la source de pression d'un fluide susceptible de s'écouler.

6. Palier suivant l'une quelconque des revendications 1 à 5, caractérisé en ce que la pièce de palier compressible ou dilatable a la forme d'un cylindre creux, dont la paroi (21) est constituée de matière plastique armée de fibres, la paroi étant réalisée en plusieurs couches, avec une partie de couches plus épaisse, munie d'une armature en fibres (22) disposées parallèlement à l'axe.

7. Palier suivant la revendication 6, caractérisé en ce que les fibres (22) dirigées parallèlement à l'axe et constituant l'armature sont des fibres de carbone et en ce que les fibres d'armature, dirigées dans la direction périphérique et constituant une partie plus mince des couches, sont des fibres de verre.

8. Machine comportant des paliers suivant l'une quelconque des revendications 1 à 7, caractérisée en ce qu'un support de bras de mesure (40) est guidé sur deux tiges cylindriques (31, 32) de section circulaire, au moyen d'un palier (27, 28), le palier (27), situé du côté opposé au bras de mesure, servant à empêcher sa rotation.

9. Guidage à glissières, comportant au moins un palier suivant l'une quelconque des revendications 1 à 7, caractérisé en ce que la pièce formant glissière du guidage à glissière, enveloppe, au moyen d'un palier (35, 36), une tige servant au positionnement avec blocage.

FIG. 1

2

5

6

4

3

21 22 25

1,2mm

0,3mm

23 24

FIG. 4

FIG. 2

10

9

8 2

4

14 15 18 16 17 2

13

12

FIG. 3

34

FIG. 5

31 32

29

2

30

2

27 40

28

33

FIG. 6

2 2 35

FIG. 7

2 36

2